# FASCICULE DE BREVET EUROPEEN

(11) **EP 1 032 280 B1**
(45) Date de publication et mention de la délivrance du brevet: **21.11.2001**
(21) Numéro de dépôt: 98955695.6
(22) Date de dépôt: 19.11.1998
(51) Int. Cl.: A23L 1/30, A23L 1/36

(54) **ALIMENT OU SUPPLEMENT NUTRITIONNEL, SON PROCEDE DE PREPARATION ET SES UTILISATIONS**
NÄHRUNGSMITTEL ODER NÄHRUNGSERGÄNZUNGSMITTEL, VERFAHREN ZUR HERSTELLUNG UND VERWENDUNGEN DESSELBEN
FOOD OR NUTRITIONAL SUPPLEMENT, PREPARATION METHOD AND USES

(30) Priorité: 21.11.1997 FR 9714655
(43) Date de publication de la demande: 06.09.2000
(73) Titulaire: Nutriset, 76770 Malaunay (FR); Institut de Recherche pour le Développement ( IRD), 75480 Paris Cedex 10 (FR)
(72) Inventeur: BRIEND, André, F-75480 Paris Cedex 10 (FR); LESCANNE, Michel, F-76770 Malaunay (FR)
(74) Mandataire: Touati, Catherine
(86) Numéro de dépôt international: FR9802469
(87) Numéro de publication internationale: WO9926490

(56) Documents cités:
- EP-A- 0 442 140
- WO-A-94/14458
- WO-A-97/05789
- DE-A- 2 345 045
- GB-A- 2 242 342

## Description

L'invention concerne des aliments riches en énergie, à basse osmolalité contenant au plus 10% de leur poids en eau. Cette invention permet de préparer des aliments apportant tous les nutriments, et en particulier les élément minéraux et toutes les vitamines nécessaires à la renutrition des patients dénutris, et peut donc servir d'aliment complet pour ces patients. Cette invention permet également de préparer des suppléments nutritionnels permettant d'apporter tous les nutriments présents en quantité insuffisante dans les régimes où les céréales constituent l'essentiel de la ration alimentaire. Ces aliments sont insolubles dans l'eau avant dispersion par agitation et ne génèrent pas d'hyper-osmolalité. Ils sont stables à l'oxydation. L'invention concerne également le procédé de préparation de ces aliments ainsi que leurs utilisations.

Les patients sévèrement dénutris sont habituellement renourris à l'aide d'aliments en poudre qui se consomment après dissolution dans de l'eau. Ces aliments sont préparés à partir de produits lactés en poudre (lait écrémé, lactosérum) mélangés à des glucides, des vitamines, des minéraux et lipides. Afin de relever la valeur énergétique de ces produits, les lipides représentent généralement plus de 30% du poids sec de ces aliments. Les produits les plus couramment utilisés actuellement désignés sous le terme de formules F75 et F100 ont été décrits par A. BRIEND et MHN GOLDEN dans "Malnutrition sévère de l'enfant", Encyclopédie Médico Chirurgicale (Elsevier, Paris) Endocrinologie Nutrition 10-337-A-10 1997 page 8. Leur appellation rappelle qu'après dilution ils amènent respectivement 75 et 100 kcal/100 ml. Ces produits en poudre présentent cependant un certain nombre d'inconvénients. Tout d'abord, il existe des risques d'erreurs de dosage dues à la préparation par dilution dans l'eau, risques éliminés par l'utilisation de produits prêts à consommer. Par ailleurs, la dilution dans l'eau avant consommation peut être un facteur de contamination par des bactéries ce qui rend l'utilisation de ces produits en poudre risquée quand les conditions d'hygiènes sont défaillantes. En outre, cette mise en solution aqueuse avant consommation conduit à la préparation de repas qui sont fréquemment hyperosmolaires quand on tente d'augmenter leur valeur énergétique. Il est difficile avec les aliments de renutrition classiques en poudre d'atteindre une densité énergétique très supérieure à 100 kcal/100 ml après dilution en raison de l'augmentation de l'osmolalité pouvant monter au delà de 400 mOsm /kg. Ceci constitue un problème majeur car le sujet dénutri ne tolère pas les aliments ayant une osmolalité supérieure à celle du plasma sanguin (290 mOsm/kg environ) qui risquent chez eux d'entraîner des diarrhées. Cette dilution dans l'eau impose par ailleurs l'emploi de sels minéraux solubles pour l'enrichissement de ce type d'aliments, les sels insolubles risquant de rester au fond du récipient si la totalité de l'aliment dilué n'est pas ingérée. Ces sels solubles ont un goût prononcé, alors que les sels insolubles sont insipides. Les aliments destinés à être dilués dans l'eau ont donc un goût peu agréable s'ils sont enrichis en minéraux. Par ailleurs, la présentation sous forme de poudre de ces aliments augmente leur surface de contact avec l'atmosphère ambiante qui pénètre à l'intérieur de la poudre. Ce phénomène expose ces aliments au risque d'oxydation lors de leur conservation, et ce d'autant plus qu'ils se présentent sous forme de poudre fine. Cette oxydation peut se produire au niveau des lipides, produisant un rancissement de l'aliment, et également des vitamines sensibles à l'oxydation qu'ils peuvent contenir, en particulier la vitamine C et la vitamine A. Si la date de conservation de ces produits doit être supérieure à quelques semaines en climat tropical, il est nécessaire d'entourer la partie lipidique de ces produits par une couche protectrice de protéines ou de glucides et de conditionner ces produits sous gaz chimiquement inerte, comme le gaz carbonique ou l'azote, dans des sachets parfaitement étanches. Cette contrainte augmente considérablement le prix de ces produits de renutrition et limite les possibilités de fabrication de ces produits dans les pays en voie de développement. Par ailleurs ces différents produits en poudre, sont volumineux lors du stockage, et posent de nombreux problèmes de transport et de manutention.

Les laits concentrés sucrés ont la propriété d'avoir une teneur en eau très faible, et en conséquence, ces laits résistent à la contamination bactérienne. Ces laits ne peuvent pas cependant être utilisés sans dilution préalable chez le sujet dénutri en raison de leur osmolalité extrêmement élevée. Même après dilution ces laits conservent une osmolalité élevée. Ils ont par ailleurs un rapport entre protides, lipides et glucides très différent de celui des laits classiques et également très différent des formules de type F100 ou F75. Ces produits -sont donc fortement déconseillés chez le sujet dénutri.

Il a été proposé également de renourrir les sujets dénutris à l'aide de biscuits adaptés, résistant naturellement à la contamination bactérienne en raison de leur faible teneur en eau. Les biscuits cependant peuvent difficilement apporter plus de 10 à 12% de leur poids sous forme de lipides pour des raisons de résistance mécanique et de conservation. Par ailleurs, les vitamines thermosensibles sont détruites lors de la préparation des biscuits qui nécessitent une cuisson à haute température.

Il existe donc un réel besoin pour des aliments complets et des suppléments nutritionnels de goût agréable, stables à l'oxydation, pouvant être consommés directement sans dilution préalable dans l'eau, faciles à transporter, ayant une haute valeur énergétique, pouvant contenir des produits sensibles à l'oxydation tels que des vitamines, certains sels minéraux et certains enzymes et présentant un faible pouvoir osmotique de façon à éviter les effets secondaires de type diarrhée chez le sujet dénutri.

Les inventeurs ont mis au point des aliments complets et des suppléments nutritionnels présentant l'ensemble de ces propriétés.

La présente invention a donc pour objet un aliment complet ou un supplément nutritionnel riche en lipides, contenant au plus 10%, de préférence au plus 5% et plus préférentiellement encore au plus 2% de son poids en eau, ayant une basse osmolalité et stable vis-à-vis de l'oxydation, comprenant un mélange de produits de qualité alimentaire, ledit mélange étant enrobé par au moins une substance riche en lipides éventuellement issue en partie de graines d'oléagineux.

Dans ce qui suit, on entend par "aliment riche en lipides", un aliment complet ou un supplément nutritionnel qui contient au moins 30% de son poids total sous forme de lipides.

Les produits apportant la majeure partie des protides, des glucides, des vitamines et des minéraux contenus dans le produit final se présentent sous la forme d'une poudre fine ou sous forme particulaire ou granulaire. Ces produits sont mélangés entre eux dans un premier temps. Certains produits peuvent cependant se présenter sous forme de liquide, mais dans ce cas, ils sont présents en des proportions telles que l'ensemble après mélange soit pulvérulent ou sous forme particulaire ou granulaire et que la teneur en eau de l'aliment complet ou du supplément nutritionnel résultant soit d'au plus 10% en poids, de préférence d'au plus 5% en poids et plus préférentiellement encore d'au plus 2% en poids.

Ce premier mélange se présentant sous forme de poudre est ensuite inclus dans une substance pâteuse riche en lipides pouvant éventuellement provenir en partie de graines d'oléagineux. Le produit final, aliment complet ou supplément nutritionnel selon l'invention, a une consistance semi-pâteuse ou pâteuse. Le produit final n'est pas soluble dans l'eau. Il s'agit d'un mélange constitué d'une phase pulvérulente, granulaire ou particulaire, anhydre ou à très faible teneur en eau contenue dans une phase lipidique visqueuse. Ce mélange ne développe donc pas de pression osmotique notable. L'osmolalité reste inférieure à 100 mOsm/kg quand le produit est immergé dans une quantité d'eau quatre fois supérieure à son poids. Cette propriété persiste tant que le produit n'a pas été mis en suspension par agitation.

La consistance du produit final peut être choisie en fonction de son utilisation en modifiant la composition en acides gras de la phase lipidique. La viscosité à 25°C de cet aliment complet ou supplément nutritionnel peut être comprise entre 200 et 100, de préférence entre 180 et 120, et plus préférentiellement encore entre 160 et 150 poises. Cette consistance permet au produit d'être consommé par de jeunes enfants, en règle générale à partir de l'âge d'un an. Il peut facilement être avalé également par des patients dénutris ayant une force musculaire très diminuée.

De préférence la viscosité de l'aliment complet ou supplément nutritionnel selon l'invention est suffisamment faible pour pouvoir s'écouler s'il est contenu dans un emballage souple sur lequel on exerce une légère pression, tout en étant suffisamment élevée pour ne pas se répandre spontanément sous l'effet de son propre poids.

Le mélange pulvérulent ou sous forme particulaire ou granulaire est enrobé par au moins une substance riche en lipides pouvant être issue en partie de graines d'oléagineux. Les graines d'oléagineux employées peuvent être des arachides, des fèves de cacao, des amandes, des noix de coco, des pistaches, ou être constituées d'un mélange de corps gras divers d'origine végétale. De préférence, ces graines sont réduites en pâte par broyage, sans purification ultérieure. On peut éventuellement utiliser des arachides. Dans ce dernier cas, les arachides sont broyées de telle sorte que l'on obtienne une pâte contenant de faibles proportions de particules non broyées.

L'aliment complet ou supplément nutritionnel selon l'invention contient au moins un produit apportant des protides, en particulier le lait écrémé, le yaourt en poudre, le lactosérum, et/ou au moins un produit apportant des glucides, en particulier les substances glucidiques de charge, le saccharose, le glucose, le fructose, le lait écrémé, le lactosérum, les farines de maïs, blé, mil, avoine, riz, manioc, amidon de pommes de terre et/ou au moins un produit apportant des lipides.

Par "substances glucidiques de charge", on entend les hydrolysats de l'amidon ou de ses dérivés qui sont assimilables par l'organisme tels que, par exemple, la maltodextrine.

La substance d'enrobage lipidique, si elle est issue de graines d'oléagineux participe également à l'apport en protides et bien entendu en lipides dudit aliment complet ou supplément nutritionnel. La substance d'enrobage peut apporter entre 10% et 40% des protides de l'aliment, ce qui réduit sensiblement le coût du produit final par rapport aux produits équivalents en poudre contenant uniquement des protéines d'origine laitière.

Comme produits apportant des lipides, on peut utiliser des matières grasses végétales ou animales. Les matières grasses d'origine végétale sont généralement préférées en raison de leur meilleure digestibilité. Le choix de la matière grasse utilisée dépend de la valeur nutritionnelle et de la viscosité recherchées.

L'aliment complet ou supplément nutritionnel en raison de sa viscosité variable peut être moulé dans un emballage étanche de façon à réduire au maximum les quantités d'air résiduel présent dans l'emballage. Dans ce cas, la surface de contact de la composante lipidique de ce produit avec l'atmosphère ambiante est très réduite par rapport aux produits équivalents en poudre. Le niveau de protection contre l'oxydation atteint dans ce cas permet de se passer d'un emballage sous gaz neutre pour la conservation pendant plusieurs mois ou sur plusieurs années de ce produit.

L'aliment complet ou supplément nutritionnel selon l'invention peut être enrichi artificiellement en vitamines, et sels minéraux solubles ou insolubles ou en leurs mélanges. Il peut inclure des enzymes. Ces vitamines, enzymes ou sels minéraux sont des substances parfois instables. De part sa composition, l'aliment complet ou le supplément nutritionnel assure une conservation de ces substances dans des conditions optimales étant donné qu'elles sont enrobées par une substance riche en lipides, ladite substance formant une barrière à l'oxygène, à l'humidité et entre les différents constituants susceptibles de réagir entre eux.

Comme sels minéraux, on peut utiliser de façon indifférente des sels minéraux solubles ou insolubles dans l'eau, le produit n'étant pas en solution aqueuse. Les sels minéraux insolubles présentent l'avantage d'être moins coûteux et insipides. A titre d'exemple de sels minéraux, on peut citer le carbonate de calcium, l'oxyde de zinc, le sulfate de cuivre, le chlorure de potassium, l'oxyde de magnésium et les sels de fer.

Des additifs de qualité alimentaire peuvent également être incorporés dans ledit mélange, notamment des agents facilitant le mélange des poudres, des émulsifiants, des édulcorants, des colorants ou des parfums, de façon à conférer au produit un caractère plus appétissant facilitant ainsi sa prise.

Le niveau de protection contre l'oxydation apporté par la phase lipidique permet d'envisager l'inclusion d'enzymes digestifs ou de produits riches en enzymes digestifs, comme par exemple le yaourt en poudre. Ces produits peuvent permettre une digestion plus aisée chez certains sujet dénutris.

L'absence d'air à l'intérieur d'un emballage contenant cet aliment ou ce supplément nutritionnel en augmente la densité. On peut admettre que 1 tonne de cet aliment complet ou supplément nutritionnel occupe environ un volume de 1 m³ alors qu'un produit équivalent en poudre occuperait un volume de 2 m³. Cette densité élevée facilite grandement le transport de cet aliment complet ou de ces suppléments nutritionnels par rapport aux produits équivalents en poudre.

L'aliment complet ou supplément nutritionnel selon l'invention comprend un mélange d'au moins un produit apportant des glucides et/ou d'au moins un produit apportant des protides et/ou d'au moins un produit apportant des lipides, enrobé par la substance riche en lipides, dans des proportions telles que l'apport énergétique pour 100 g d'aliment complet ou de supplément nutritionnel, soit supérieur à 350 kcal, et plus préférentiellement encore supérieur à 450 kcal.

Ainsi, l'aliment complet ou supplément nutritionnel a une valeur énergétique très supérieure à celle des produits classiquement utilisés dans les régimes de renutrition obtenu après dilution d'un produit en poudre dans de l'eau, produit en poudre dont la mise en solution aqueuse impose une limite en termes de contenu énergétique en raison des problèmes d'hyper-osmolalité.

Selon un mode de réalisation particulier de l'invention, l'aliment complet ou supplément nutritionnel selon l'invention comprend un mélange :
- de 5 à 50%, de préférence de 10 à 30%, et plus préférentiellement encore de 15 à 25% de matières grasses végétales ;
- de 2 à 60%, de préférence de 5 à 40%, et plus préférentiellement encore de 10 à 20% de lait écrémé ;
- de 2 à 60%, de préférence de 5 à 40%, et plus préférentiellement encore de 10 à 20% de lactosérum ;
- de 5 à 50%, de préférence de 10 à 30%, et plus préférentiellement encore de 15 à 25% de substance glucidique de charge ;
- de 0 à 15%, de préférence de 2 à 10%, et plus préférentiellement encore de 6 à 8% de saccharose,
- de 0 à 10%, de préférence de 0 à 6% et plus préférentiellement encore de 0 à 3% d'émulsifiant;
ledit mélange étant enrobé par 10 à 90 %, de préférence par 15 à 50% en poids, et plus préférentiellement encore par 20 à 30% en poids de pâte d'arachide ,
lesdits pourcentages étant exprimés en poids par rapport au poids total de l'aliment complet ou du supplément nutritionnel.

Bien entendu, les différents pourcentages seront adaptés en fonction du type de régime à suivre, notamment s'il s'agit d'un régime de renutrition en phase initiale ou en phase de croissance rapide. En particulier, il est possible de réduire la quantité de protides et de lipides présente dans le mélange final pour préparer un aliment destiné à être utilisés pendant la première phase du traitement.

L'aliment complet ou le supplément nutritionnel selon l'invention peut être préparé par un procédé suivant lequel on mélange la totalité ou une partie des produits pulvérulents ou sous forme particulaire ou granulaire, puis on ajoute à ce mélange les matières grasses et la substance d'enrobage, on mélange à nouveau, puis on coule la composition résultante dans l'emballage.

De préférence, dans ce procédé de fabrication, on mélange tout d'abord les produits pulvérulents ou sous forme particulaire ou granulaire qui sont en faible concentration, puis on ajoute, tout en les mélangeant, les produits pulvérulents ou sous forme particulaire ou granulaire qui sont en concentration plus élevée et ensuite on incorpore les matières grasses et la substance d'enrobage.

De préférence, afin de faciliter le suivi du régime alimentaire, on utilise des emballages contenant la quantité d'aliment complet ou de supplément nutritionnel consommée lors d'un repas ou une quantité suffisante pour répondre aux besoins nutritionnels journaliers de la personne à laquelle ce produit doit être administré.

L'aliment complet ou supplément nutritionnel peut être consommé directement sous forme de pâte, sans dilution préalable dans de l'eau. Il peut être utilisé dans des programmes nutritionnels destinés notamment aux jeunes enfants, en règle générale après l'âge d'un an, aux personnes âgées ou aux adolescents. L'utilisation chez le plus jeune enfant peut être envisagée dans le cas où il est possible de s'assurer que l'enfant consomme des quantités d'eau couvrant ses besoins en même temps que ses repas ou entre ses repas. Les dosages sont effectués en fonction des besoins de la personne qui suit ce régime. Il peut également être utilisé en mélange avec les préparations culinaires classiques.

Etant donné l'absence de dilution, les problèmes de prolifération bactérienne, notamment à la suite d'une contamination bactérienne par l'eau ou les récipients dans lesquels les dilutions sont faites, sont écartés.

La présente invention va être illustrée à l'aide des exemples suivants qui ne sont pas limitatifs.

### EXEMPLES

### Example 1 : Aliment complet permettant de réalimenter un sujet dénutri.

Dans un pétrin, on verse :
- 1 sac de 25 kg de poudre de lait écrémé,
- 1 sac de 25 kg de lactosérum,
- 1 sac de 25 kg de maltodextrine,
- puis 12,5 kg de saccharose,
- et 1 kg de complément minéral et vitaminique dont la composition est donnée ci-dessous dans le tableau 1.

Puis on met en marche l'hélice à 55 t/mn pendant 3 minutes, puis en sens inverse pendant 3 minutes et enfin pendant 2 minutes à 85 t/mn.

On verse alors dans le pétrin 40 kg de pâte d'arachide et 40 kg de matière grasse dont la composition est décrite dans le tableau 2. On agite à 55 t/mn pendant 4 minutes puis à 85 t/mn pendant 2 minutes.

La composition nutritionnelle de cet aliment complet est donnée dans le tableau 3. Cette formule a une valeur énergétique de 545 kcal / 100 g, qui est plus de 5 fois supérieure à celle de la formule F100 après dilution.

La viscosité de la pâte obtenue en fonction de la température est indiquée sur la figure 1.

**Tableau 1 :**

| **Mélange de vitamines et de minéraux utilisés dans l'exemple 1** | |
|---|---|
| **Produits** | **Quantité** **(en grammes pour 600 grammes, soit pour 100 kg d'aliment).** |
| Vitamine A | 8,68 |
| Vitamine D | 5,04 |
| Vitamine E | 31,50 |
| Vitamine C | 45,53 |
| Vitamine B1 | 0,47 |
| Vitamine B2 | 1,42 |
| Vitamine B6 | 0,47 |
| Vitamine B12 | 0,42 |
| Vitamine B9 | 0,17 |
| Vitamine PP | 4,17 |
| Vitamine B5 | 2,44 |
| Vitamine B8 | 0,05 |
| Vitamine K | 0,33 |
| Oxyde de zinc | 9,30 |
| Carbonate de calcium | 93,06 |
| Sulfate de cuivre | 3,24 |
| Chlorure de potassium | 393,71 |
| **TOTAL** | **600** |

**Tableau 2 :**

| **Composition donnée à titre indicatif de la matière grasse employée dans l'exemple 1 de fabrication d'aliment complet.** | | | |
|---|---|---|---|
| **Acide gras** | **Pourcentage** | **Acide gras** | **Pourcentage** |
| C6 | 0,10 | C18:0 | 8,80 |
| C8 | 1,25 | C18:1 | 31,65 |
| C10 | 1,10 | C18:2 | 8,3 |
| C12 | 14,35 | C18:3 | 0,20 |
| C14 | 5,50 | C20:0 | 0,30 |
| C16 | 27,80 | C20:1 | 0,1 |
| | | divers | 0,55 |

**Tableau 3**

| **Composition nutritionnelle donné à titre indicatif de l'aliment complet décrit dans l'exemple 1** | | |
|---|---|---|
| | **Quantité pour 100g** | **Pourcentage de l'énergie** |
| Energie | 545 kcal | |
| Protides | 14 g | 10 |
| Glucides | 43 g | 31 |
| Lipides | 36 g | 59 |

### Exemple 2 : Supplément nutritionnel se présentant sous la forme d'une sauce grasse à base de pâte d'arachide.

On prépare un mélange contenant :
- 33 kg de pâte d'arachide,
- 26 kg de matière grasse,
- 37 kg de farine de soja entière désamérisée,
- 4 kg du complément minéral et vitaminique dont la composition est donnée dans le tableau 4.

**Tableau 4**

| **Produits** | **Quantité** **(en grammes pour 4000 grammes, soit pour 100 kg de bouillie).** |
|---|---|
| Vitamine A | 6,12 |
| Vitamine D | 2,80 |
| Vitamine E | 13,68 |
| Vitamine C | 59,74 |
| Vitamine B1 | 1,20 |
| Vitamine B2 | 1,50 |
| Vitamine B6 | 0,67 |
| Vitamine B12 | 1,61 |
| Vitamine B9 | 0,31 |
| Vitamine PP | 9,29 |
| Vitamine B5 | 7,14 |
| Oxyde de zinc | 12,63 |
| Sulfate de fer | 10,26 |
| Carbonate de calcium | 1244,54 |
| Sulfate de cuivre | 1,18 |
| Chlorure de potassium | 1205,45 |
| Oxyde de magnésium | 185,18 |
| Phosphate dipotassique | 1185,31 |
| Phosphate tricalcique | 51,31 |
| **TOTAL** | **4000** |

Le produit gras ainsi obtenu peut être utilisé comme une sauce grasse utile pour supplémenter une bouillie de préparation familiale. On obtient alors une bouillie ayant la composition suivante :
- 14,4 g de farine de blé,
- 3,4 g de saccharose,
- 77,8 g d'eau.
- 4,4 g de sauce

La bouillie obtenue représente un aliment complet, apportant toutes les vitamines et tous les éléments minéraux nécessaires à la renutrition d'un enfant modérément dénutri.

Le produit gras ainsi obtenu peut être également consommé seul, en complément à une alimentation à base de céréales, sans être préalablement mélangé à une bouillie. Sa consistance en effet est suffisamment fluide pour pouvoir être consommée directement par les enfants de plus de six mois, de préférence de plus d'un an. Sa basse osmolarité le rend parfaitement toléré par les jeunes enfants malgré sa teneur élevée en sels minéraux. Par ailleurs, l'utilisation de sels minéraux insolubles, possible avec ce type d'aliments, permet d'obtenir un goût parfaitement accepté par les enfants.

### Exemple 3 : Supplément nutritionnel se présentant sous la forma d'une sauce grasse ne contenant pas d'arachide

On prépare un mélange contenant :
- 20 kg de farine de soja dégraissée (ou tout autre source de protéine à l'exception des ingrédients issus de l'arachide),
- 52 kg de matière grasse,
- 13 kg de lactoserum,
- 7 kg de saccharose,
- 8 kg de complément minéral et vitaminique dont la composition est donnée dans le tableau 1.

Ce produit s'utilise dans les mêmes conditions que celui décrit dans l'exemple 2. Il a en outre l'avantage de pouvoir être utilisé dans les zones où l'allergie à la pâte d'arachide est commune.

### Exemple 4 : Supplément nutritionnel se présentant sous la forma d'une sauce grasse n'apportant comma source de protéines que des protéines de lait

On prépare un mélange contenant :
- 40 kg de matière grasse,
- 40 kg de poudre de lait écrémé,
- 16 kg de lactoserum,
- 4 kg de saccharose,
- 0,23 kg de complément minéral et vitaminique dont la composition est donnée dans le tableau 1.

Ce produit s'utilise dans les mêmes conditions que celui décrit dans les exemples 2 et 3. Sa composition peut être ajustée pour respecter après mélange avec une farine de céréales les spécifications du Codex Alimentarius concernant les aliments pour jeunes enfants, pour les concentrations de protéines, lipides et glucides ainsi que pour celles des vitamines et des éléments minéraux. Il a donc l'avantage de pouvoir éventuellement être donné aux jeunes enfants, mélangé à une farine de céréales, à partir de l'âge de quatre mois. L'addition d'amylase rend possible son utilisation après mélange avec une farine de céréales chez des enfants dont la fonction pancréatique n'est pas assez mature pour permettre la digestion de grandes quantités d'amidon.

## Revendications

1. Aliment complet ou supplément nutritionnel contenant au plus 10% en poids d'eau, de préférence au plus 5% d'eau, et plus préférentiellement encore au plus 2% d'eau, développant une osmolalité inférieure à 100mOsm/kg, stable vis-à-vis de l'oxydation, comprenant un mélange de produits de qualité alimentaire, ledit mélange étant enrobé par au moins une substance riche en lipides, issue de graines d'oléagineux et étant enrichi en vitamines, en sels minéraux solubles ou insolubles, en enzymes, ou leurs mélanges.

2. Aliment complet ou complément nutritionnel selon la revendication 1, **caractérisé en ce qu'**il contient au moins 3.0% en poids de son poids total sous forme de lipides.

3. Aliment complet ou supplément nutritionnel selon l'une ou l'autre des revendications 1 et 2, se présentant sous la forme d'une pâte visqueuse ou semi-visqueuse non soluble dans l'eau développant une osmolalité inférieure à 50 mOsm/kg et de préférence inférieure à 10 mOsm/kg après immersion dans un volume d'eau quatre fois supérieur au sien.

4. Aliment complet ou supplément nutritionnel selon l'une quelconque des revendications 1 à 3, **caractérisé en ce qu'**il présente une viscosité à 25°C comprise entre 200 et 100, de préférence entre 180 et 120, et plus préférentiellement encore entre 160 et 150 g/cm.s.

5. Aliment complet ou supplément nutritionnel selon l'une quelconque des revendications 1 a 4, **caractérisé en ce que** la substance d'enrobage contient une pâte provenant d'une ou de plusieurs graines d'oléagineux et notamment d'arachides, de fèves de cacao, d'amandes, de noix, de noisettes, de noix de coco et de pistaches, de préférence dans une proportion supérieure à 40% en poids du poids de la substance lipidique d'enrobage.

6. Aliment complet ou supplément nutritionnel selon l'une quelconque des revendications 1 à 5, **caractérisé en ce que** le mélange de produits de qualité alimentaire, enrobé dans la phase lipidique, est sous forme pulvérulente, granulaire ou particulaire et contient
- au moins un produit en poudre apportant des protides, et en particulier le lait écrémé, le yaourt en poudre ou le lactosérum ;
- et/ou au moins un produit apportant des glucides, en particulier le saccharose, le glucose, le fructose, la maltodextrine, le lait écrémé, le lactosérum, les farines de maïs, blé, mil, avoine, riz, manioc, amidon de pommes de terre.
- et/ou au moins un produit apportant des lipides, en particulier des matières grasses végétales ou animales ;
- et éventuellement des additifs de qualité alimentaire, en particulier des agents facilitant le mélange, des émulsifiants, des édulcorants, des colorants, des parfums.

7. Aliment complet ou supplément nutritionnel selon l'une quelconque des revendications 1 à 6, **caractérisé en ce qu'**il comprend un mélange d'au moins un produit apportant des glucides et/ou d'au moins un produit apportant des protides et/ou d'au moins un produit apportant des lipides, enrobés par une substance riche en lipides issue de graines d'oléagineux de telle sorte que la valeur énergétique pour 100g de l'aliment complet ou du supplément nutritionnel soit supérieure à 350 kcal., préférentiellement supérieure à 450 kcal.

8. Aliment complet ou supplément nutritionnel selon l'une quelconque des revendications 1 à 7, **caractérisé en ce qu'**il comprend un mélange :
- de 5 à 50%, de préférence de 10 à 30%, et plus préférentiellement encore de 15 à 25% de matières grasses végétales ;
- de 2 à 60%, de préférence de 5 à 40%, et plus préférentiellement encore de 10 à 20% de lait écrémé ;
- de 2 à 60%, de préférence de 5 à 40%, et plus préférentiellement encore de 10 à 20% de lactosérum ;
- de 5 à 50%, de préférence de 10 à 30%, et plus préférentiellement encore de 12 à 25% de substance glucidique de charge ;
- de 0 à 15%, de préférence de 2 à 10%, et plus préférentiellement encore de 6 à 8% de saccharose ;
- de 0 à 10%, de préférence de 0 à 6% et plus préférentiellement encore de 0 à 3% d'émulsifiant ;
ledit mélange étant enrobé par 10 à 90%, de préférence de 15 à 50% en poids, et plus préférentiellement encore de 20 à 30% en poids de pâte d'oléagineux riches en lipides, de préférence de la pâte d'arachide, lesdits pourcentages étant exprimés en poids par rapport au poids total dudit aliment complet ou supplément nutritionnel.

9. Procédé de préparation d'un aliment complet ou complément alimentaire selon l'une quelconque des revendications 1 à 8, **caractérisé en ce que** l'on mélange les produits apportant les glucides, les produits apportant les protides, les vitamines, les sels minéraux, les enzymes et les additifs, en totalité ou en partie, puis que l'on ajoute à ce mélange les produits apportant les lipides et la substance d'enrobage et que l'on mélange à nouveau, puis que l'on coule dans l'emballage le produit ainsi obtenu.

10. Utilisation de l'aliment complet ou du supplément nutritionnel selon l'une quelconque des revendications 1 à 8 ou préparé selon la revendication 9 dans des programmes nutritionnels de renutrition ou de supplémentation nutritionnelle ou pour pallier aux carences en vitamines, ou sels minéraux.

## Patentansprüche

1. Komplettes Nahrungsmittel oder Nahrungsergänzungsmittel umfassend höchstens 10 Gew.-% Wasser, vorzugsweise höchstens 5% Wasser und noch mehr bevorzugt höchstens 2% Wasser, das eine Osmolalität kleiner als 100 mOsm/kg entwickelt, stabil gegenüber Oxidation ist, eine Mischung aus Produkten mit Nahrungsmittelqualität umfasst, wobei die besagte Mischung von mindestens einer lipidreichen Substanz umgeben ist, die aus ölhaltigen Körnern stammt und mit Vitaminen, löslichen oder unlöslichen Mineralsalzen, Enzymen oder ihren Mischungen angereichert ist.

2. Komplettes Nahrungsmittel oder Nahrungsergänzungsmittel nach Anspruch 1,
**dadurch gekennzeichnet,**
**dass** es mindestens 30 Gew.-% seines Gesamtgewichtes in Form von Lipiden enthält.

3. Komplettes Nahrungsmittel oder Nahrungsergänzungsmittel nach den Ansprüchen 1 oder 2, das in Form einer viskosen oder halbviskosen, nicht wasserlöslichen Masse vorliegt, wobei sie eine Osmolalität kleiner als 50 mOsm/kg und vorzugsweise kleiner als 10 mOsm/kg nach dem Eintauchen in ein Wasservolumen, das viermal größer als sein Volumen ist, entwickelt.

4. Komplettes Nahrungsmittel oder Nahrungsergänzungsmittel nach einem der Ansprüche 1 bis 3,
**dadurch gekennzeichnet,**
**dass** es bei 25°C eine Viskosität umfassend zwischen 200 und 100, vorzugsweise zwischen 180 und 120 und noch bevorzugter zwischen 160 und 150 g/cm.s aufweist.

5. Komplettes Nahrungsmittel oder Nahrungsergänzungsmittel nach einem der Ansprüche 1 bis 4,
**dadurch gekennzeichnet, dass** die Umhüllungssubstanz eine Masse umfasst, die aus einem oder mehreren ölhaltigen Körnern, namentlich aus Erdnüssen, Kakaobohnen, Mandeln, Nüssen, Haselnüssen, Kokosnüssen und aus Pistazien, stammt, vorzugsweise mit einem Anteil größer als 40 Gew.-% des Gewichts der Lipidsubstanz der Umhüllung.

6. Komplettes Nahrungsmittel oder Nahrungsergänzungsmittel nach einem der Ansprüche 1 bis 5,
**dadurch gekennzeichnet,**
**dass** die Mischung der Produkte mit Nahrungsmittelqualität, die in die Lipidphase eingehüllt ist und in Pulver-, Granulat- oder Teilchenform vorliegt, umfasst:
- mindestens ein pulverförmiges Produkt, das Proteine und insbesondere entrahmte Milch, Joghurt-Pulver oder Lactoserum liefert;
- und/oder mindestens ein Produkt, das Kohlenhydrate, insbesondere Saccharose, Glucose, Fructose, Maltodextrin, entrahmte Milch, Lactoserum, Maismehle, Getreide, Hirse, Hafer, Reis, Maniok, Kartoffelstärke, liefert.
- und/oder mindestens ein Produkt, das Lipide, insbesondere pflanzliche oder tierische Fette liefert;
- und gegebenenfalls Additive mit Nahrungsmittelqualität, insbesondere Stoffe, die die Vermischung erleichtern, Emulgatoren, Süßungsmittel, Farbmittel, Geschmacksstoffe.

7. Komplettes Nahrungsmittel oder Nahrungsergänzungsmittel nach einem der Ansprüche 1 bis 6,
**dadurch gekennzeichnet,**
**dass** es eine Mischung aus mindestens einem Produkt umfasst, das Kohlenhydrate liefert und/oder aus mindestens einem Produkt, das Proteine liefert und/oder aus mindestens einem Produkt, das Lipide liefert, die mit einer lipidreichen Substanz umhüllt sind, die aus ölhaltigen Körnern einer solchen Sorte ist, dass der Energiewert für 100 g des kompletten Nahrungsmittels oder des Nahrungsergänzungsmittels größer als 350 kcal ist, bevorzugt größer als 450 kcal.

8. Komplettes Nahrungsmittel oder Nahrungsergänzungsmittel nach einem der Ansprüche 1 bis 7,
**dadurch gekennzeichnet,**
**dass** es eine Mischung umfasst:
- mit 5 bis 50%, vorzugsweise mit 10 bis 30%, und noch mehr bevorzugt mit 15 bis 25% pflanzlichen Fetten;
- mit 2 bis 60%, vorzugsweise mit 5 bis 40%, und noch mehr bevorzugt mit 10 bis 20% entrahmter Milch;
- mit 2 bis 60%, vorzugsweise mit 5 bis 40%, und noch mehr bevorzugt mit 10 bis 20% Lactoserum;
- mit 5 bis 50%, vorzugsweise mit 10 bis 30%, und noch mehr bevorzugt mit 12 bis 25% Kohlenhydrat-Ballaststoff;
- mit 0 bis 15%, vorzugsweise mit 2 bis 10%, und noch mehr bevorzugt mit 6 bis 8% Saccharose;
- mit 0 bis 10%, vorzugsweise mit 0 bis 6%, und noch mehr bevorzugt mit 0 bis 3% Emulgator;
wobei die besagte Mischung mit 10 bis 90%, vorzugsweise mit 15 bis 50 Gew.-% und noch mehr bevorzugt mit 20 bis 30 Gew.-% einer ölhaltigen lipidreichen Masse umhüllt ist, vorzugsweise mit Erdnussmasse, wobei die Prozentzahlen in Gewicht im Verhältnis zum Gesamtgewicht des kompletten Nahrungsmittels oder des Nahrungsergänzungsmittels ausgedrückt sind.

9. Verfahren zur Herstellung eines kompletten Nahrungsmittels oder eines Nahrungsergänzungsmittels nach einem der Ansprüche 1 bis 8,
**dadurch gekennzeichnet,**
**dass** man die Produkte, die die Kohlenhydrate liefern, die Produkte, die die Proteine, die Vitamine, die Mineralsalze, die Enzyme und die Additive liefern, im Ganzen oder teilweise mischt, dann zu dieser Mischung die Produkte, die die Lipide liefern, und die Umhüllungssubstanz gibt, dass man von neuem mischt, und das dann erhaltene Produkt in die Verpackung gießt.

10. Verwendung des kompletten Nahrungsmittels oder des Nahrungsergänzungsmittels nach einem der Ansprüche 1 bis 8, oder hergestellt nach Anspruch 9, in Nahrungsprogrammen der Wiederernährung oder der Nahrungsergänzung, oder um Vitamin- oder Mineralsalzmangel auszugleichen.

## Claims

1. Complete food or nutritional supplement containing a maximum of 10% wt./wt. of water, preferably a maximum of 5% water and even more preferably a maximum of 2% of water, developing an osmolality of less than 100 mOsm/kg, stable to oxidation, comprising a mixture of food-quality products, the said mixture being coated with at least one lipid-rich substance originating from oleaginous grains/seeds and being enriched with vitamins, with soluble or insoluble mineral salts, and with enzymes, or their mixtures.

2. Complete food or nutritional complement according to Claim 1, **characterised in that** it contains at least 30% wt./wt. of its total weight in the form of lipids.

3. Complete food or nutritional supplement according to one or other of Claims 1 and 2, present in the form of a viscous or semi-viscous paste, insoluble in water, and developing an osmolality less than 50 mOsm/kg and preferably less than 10 mOsm/kg after immersion in four times its own volume of water.

4. Complete food or nutritional supplement according to any of the Claims 1 to 3, **characterized in that** it has a viscosity at 25°C lying between 200 and 100, preferably between 180 and 120, and even more preferably between 160 and 150 g/cm.s.

5. Complete food or nutritional supplement according to any of the Claims 1 to 4, **characterized in that** the coating substance contains a paste originating from one or more oleaginous grains/seeds, among others peanuts, cocoa beans, almonds, nuts, hazelnuts, coconuts and pistachio nuts, preferably in a proportion greater than 40% wt./wt. of the weight of the lipid substance of the coating.

6. Complete food or nutritional supplement according to any of the Claims 1 to 5, **characterized in that** the mixture of food-quality products coated with the lipid phase is in the form of powder, granules or particles and contains:
- at least one powdered product supplying proteins, in particular skimmed milk, yoghurt powder or whey;
- and/or at least one product supplying carbohydrates, in particular sucrose, glucose, fructose, maltodextrin, skimmed milk, whey, flour made from maize, wheat, millet, oats, rice, manioc, potato starch.
- and/or a product supplying lipids, in particular vegetable or animal fats,
- and possibly food-quality additives, in particular agents to promote mixing, emulsifiers, sweeteners, colouring agents, aromas/flavourings.

7. Complete food or nutritional supplement according to any of the Claims 1 to 6, **characterized in that** it comprises a mixture of at least one product supplying carbohydrates and/or at least one product supplying proteins and/or at least one product supplying lipids, coated with a lipid-rich substance originating from oleaginous seeds/grains such that the energy value of 100 g of complete food or nutritional supplement is greater than 350 kcal., preferably greater than 450 kcal.

8. Complete food or nutritional supplement according to any of the Claims 1 to 7, **characterized in that** it comprises a mixture:
- of 5 to 50%, preferably of 10 to 30%, and even more preferably 15 to 25% of vegetable fats;
- of 2 to 60%, preferably 5 to 40%, and even more preferably 10 to 20% of skimmed milk;
- of 2 to 60%, preferably 5 to 40%, and even more preferably 10 to 20% of whey;
- of 5 to 50%, preferably of 10 to 30%, and even more preferably 12 to 25% of carbohydrate bulking agent;
- of 0 to 15%, preferably 2 to 10% and even more preferably 6 to 8% sucrose;
- of 0 to 10%, preferably 0 to 6% and even more preferably 0 to 3% of emulsifier;
the said mixture being coated with 10 to 90%, preferably 15 to 50% by weight, and even more preferably 20 to 30% wt./wt. of lipid-rich oleaginous paste, preferably peanut paste, the said percentages being expressed as weight relative to the total weight of the said complete food or nutritional supplement.

9. Process for preparing a complete food or food complement according to any one of the Claims 1 to 8, **characterized in that** the products supplying the carbohydrates, the products supplying the proteins, the vitamins, the mineral salts, the enzymes and the additives are mixed, entirely or in parts, and then the products supplying the lipids and the coating substance are added to this mixture, it is mixed again, and the product thus obtained is poured into the package.

10. Use of the complete food or nutritional supplement according to any of the Claims 1 to 8 or prepared according to Claim 9 in nutritional programs for re-nutrition or to compensate for deficiencies of vitamins or mineral salts.
